# EUROPEAN PATENT SPECIFICATION

(11) **EP 4 220 548 B1**
(45) Date of publication and mention of the grant of the patent: **20.08.2025**
(21) Application number: 21871907.8
(22) Date of filing: 01.06.2021
(51) Int. Cl.: G06T 7/00, G06T 7/20, H04N 7/18, G07C 5/00, G06V 20/40, G06V 40/10, G06V 40/16, G06T 7/277, G06T 7/73, G06V 20/52, G06V 20/59, G06V 10/25

(54) **IMAGE PROCESSING DEVICE AND IMAGE PROCESSING PROGRAM**
BILDVERARBEITUNGSVORRICHTUNG UND BILDVERARBEITUNGSPROGRAMM
DISPOSITIF DE TRAITEMENT D'IMAGE ET PROGRAMME DE TRAITEMENT D'IMAGE

(30) Priority: 23.09.2020 JP 2020158426; 23.09.2020 JP 2020158427; 13.11.2020 JP 2020189227
(43) Date of publication of application: 02.08.2023
(73) Proprietor: JVCKENWOOD Corporation, Yokohama-shi, Kanagawa 221-0022 (JP)
(72) Inventor: NAGAI Katsuyuki, Yokohama-shi Kanagawa 221-0022 (JP)
(74) Representative: Wimmer, Hubert
(86) International application number: PCT/JP2021/020804
(87) International publication number: WO 2022/064774

(56) References cited:
- WO-A1-2017/122258
- JP-A- 2017 211 988
- JP-A- 2018 022 284
- US-A1- 2019 205 903

## Description

### [TECHNICAL FIELD]

The present invention relates to a picture processing device and a picture processing program that processes a video imaged by an imager.

### [BACKGROUND ART]

As of 2020, COVID-19 (hereinafter, referred to as a new coronavirus) infections are expanding worldwide. As preventive measures against infection with the new coronavirus, masks, hand washing, securing of social distancing, and the like are mentioned. In addition, in order to prevent infection via objects, it is required to frequently disinfect an object touched by a person.

In a conference room or a convention hall, a large number of people may gather, and there is a risk of cluster infection. It is necessary to thoroughly clean and disinfect after the end of use of the conference room or the convention hall.

### [PRIOR ART DOCUMENT]

### [Patent Literature]

JP 2011-257849 A discloses A driving recorder and a navigation device are connected with a connecting cable. The driving recorder acquires a reference date and hour data from the navigation device and records captured image data associated with the date and hour data, which is set based on the acquired reference data. The image data is transmitted to the navigation device and displayed on a display unit 24 of the navigation device. When recording a history of positional information by a GPS log function, the navigation device records the date and hour data. The navigation device has a function which associates the image data and the positional information with the date and hour data used as a key, and shows, on a map, at which position the display image data is captured.

US 2019 205903 A discloses an information-processing device which includes: a person detection and tracking unit that receives analysis information related to positions of persons in a target area, and calculates first person's-tracking-information; a same person detection unit that specifies the persons related to the first person's-tracking-information, classifies the first person's-tracking-information of the persons, and calculates second person's-tracking-information of a position of the persons; a direction calculation unit that calculates movement direction information of the persons based on the second person's-tracking-information; a staying time calculation unit that calculates staying-place information and staying-time information of the persons based on the second person's-tracking-information; and a processing unit that calculates trajectory information and staying information of the persons based on the movement direction information, the staying-place information, and the staying-time information.

### [SUMMARY OF INVENTION]

However, when it is necessary to clean and disinfect a room in a short time, it is difficult to thoroughly clean and disinfect the entire room. When cleaning and disinfecting the room, if a place to which a virus may be attached is known, the place can be preferentially disinfected, and a disinfection work can be made efficient.

The present embodiment has been made in view of such a situation, and an object thereof is to provide a technique for supporting efficient disinfection of a space where a virus may be attached somewhere.

In accordance with the present invention, a picture processing device, picture processing method, and picture processing program as set forth in the appended claims is provided.

With the present embodiment, it is possible to support efficient disinfection of a space where a virus may be attached somewhere.

### [BRIEF DESCRIPTION OF DRAWINGS]

Fig. 1 is a diagram illustrating an installation example of an imaging device in a vehicle.
Fig. 2 is a diagram illustrating a structural example of a person monitoring system according to a first embodiment.
Fig. 3 is a diagram illustrating an example of a frame picture imaged while the vehicle is traveling according to the first embodiment.
Fig. 4 is a diagram illustrating an example of a contact place picture according to the first embodiment.
Fig. 5 is a diagram illustrating another example of the contact place picture according to the first embodiment.
Fig. 6 is a diagram illustrating a first example of a stay place picture according to a second embodiment.
Fig. 7 is a diagram illustrating a second example of the stay place picture according to the second embodiment.
Figs. 8A to 8C are diagrams illustrating a third example of the stay place picture according to the second embodiment.
Fig. 9 is a diagram illustrating a fourth example of the stay place picture according to the second embodiment.
Fig. 10 is a diagram illustrating a fifth example of the stay place picture according to the second embodiment.
Fig. 11 is a diagram illustrating a structural example of a person monitoring system according to a third embodiment.

### [DESCRIPTION OF EMBODIMENTS]

A first embodiment that is not covered by the present invention relates to a person monitoring system that photographs an occupant with a camera installed in a vehicle interior, and monitors and records a place touched by the occupant by his/her hand.

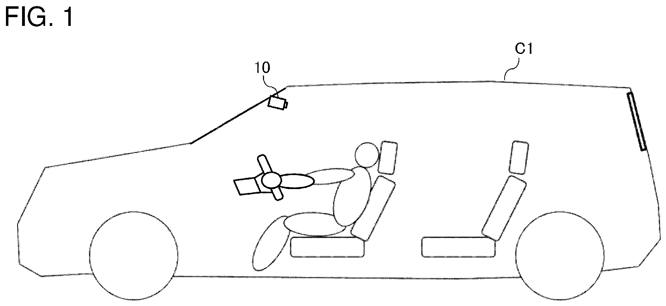

Fig. 1 is a diagram illustrating an installation example of an imaging device 10 in a vehicle C1. In Fig. 1, the imaging device 10 is attached to a rearview mirror. Note that the imaging device 10 may be installed on a center visor or a center console. Moreover, the imaging device 10 may be installed on a ceiling of the vehicle interior so as to overlook inside of the vehicle interior from above. For example, when a circumferential fisheye lens is used, the entire circumference of a hemispherical shape in the vehicle interior can fall within an angle of view.

As the imaging device 10, a dedicated camera may be installed, or a camera of a drive recorder or a vehicle interior monitoring system may be used. The vehicle interior monitoring system is a system that monitors the entire vehicle interior including a passenger seat and rear seats, and can detect, in addition to dozing and inattentive driving of the driver, the number of occupants sitting on the passenger seat and the rear seat, whether all occupants including the driver wear seat belts, and the like.

The imaging device 10 includes a lens, a solid-state imaging element, and a signal processing circuit. As the solid-state imaging element, a complementary metal oxide semiconductor (CMOS) image sensor or a charge coupled device (CCD) image sensor can be used. The solid-state imaging element converts light incident through the lens into an electrical video signal and outputs the video signal to the signal processing circuit. The signal processing circuit performs signal processing such as A/D conversion and noise removal on the video signal input from the solid-state imaging element, and outputs the processed signal to the picture processing device 20.

The imaging device 10 may include a depth sensor for constructing a depth map. As the depth sensor, for example, a three-dimensional light detection and ranging (3D-LiDAR) can be used. The LiDAR emits laser light in a photographing direction, measures a time until the reflected light is received, and detects a distance to an object in the photographing direction. Furthermore, the imaging device 10 may include a binocular stereo camera. In this case, it is possible to construct the depth map based on a parallax between the two pictures without providing the depth sensor.

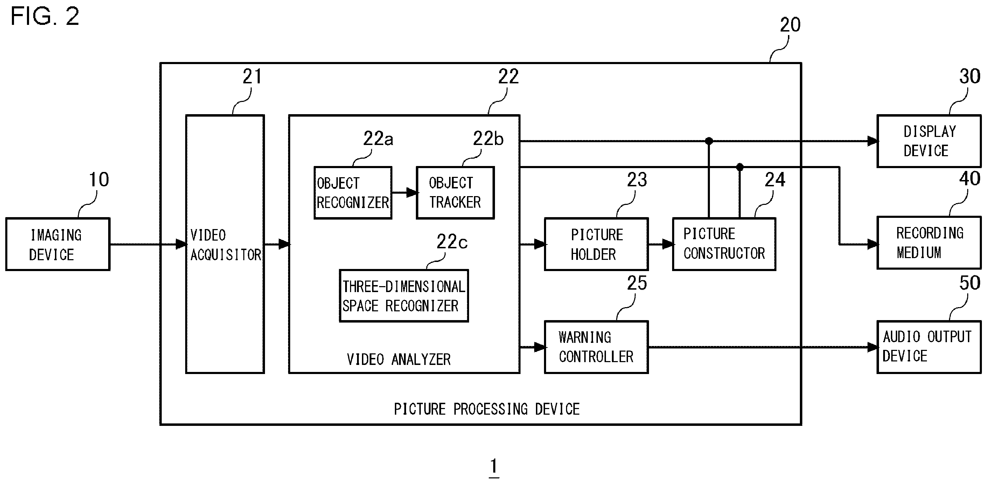

Fig. 2 is a diagram illustrating a structural example of a person monitoring system 1 according to the first embodiment. The person monitoring system 1 includes a picture processing device 20, a display device 30, a recording medium 40, and an audio output device 50. The picture processing device 20 includes a video acquisitor 21, a video analyzer 22, a picture holder 23, a picture constructor 24, and a warning controller 25. These constituting elements can be implemented by cooperation of hardware resources and software resources or only hardware resources. As the hardware resources, a CPU, a ROM, a RAM, a graphics processing unit (GPU), a digital signal processor (DSP), an image signal processor (ISP), an application specific integrated circuit (ASIC), a field-programmable gate array (FPGA), and other LSIs can be used. A program such as firmware can be used as a software resource.

The picture processing device 20 may be implemented on a dedicated IC substrate, or may be implemented by being integrated with a car navigation system or a drive recorder system. The picture processing device 20 may be structured as one function of a general-purpose information terminal device such as a smartphone and a tablet. The imaging device 10 and the picture processing device 20 are connected to each other in a wired or wireless manner. In a case where the picture processing device 20 is implemented on a dedicated IC substrate, the picture processing device 20 and the imaging device 10 may be installed in the same housing, or may be installed in separate housings.

The video acquisitor 21 acquires a video imaged by the imaging device 10. The video analyzer 22 analyzes the video acquired by the video acquisitor 21. In the first embodiment, the video analyzer 22 detects a place touched by an occupant by his/her hand in the vehicle interior.

The video analyzer 22 includes an object recognizer 22a, an object tracker 22b, and a three-dimensional space recognizer 22c. The object recognizer 22a searches for an object in a frame in the video acquired by the video acquisitor 21. The object recognizer 22a includes, as dictionary data, a discriminator for a specific object constructed by learning a large number of pictures in which the specific object appears. In the first embodiment, a person's hand discriminator is prepared. The person's hand discriminator includes at least a discriminator for a state where the back of a hand is opened. Note that as a hand discriminator, it is preferable to prepare a plurality of discriminators for various states of a hand viewed from various angles.

In addition to the person's hand discriminator, discriminators for various accessories existing in the vehicle interior may be prepared. For example, discriminators for a steering wheel, a seat belt, a shift lever, and the like may be prepared.

The object recognizer 22a searches the frame of the video using a discriminator for each object. For recognition of an object, for example, histograms of oriented gradients (HOG) feature amounts can be used. Note that a Haar-like feature amount, a local binary patterns (LBP) feature amount, or the like may be used. In a case where an object exists in the frame, the object recognizer 22a supplements the object with a rectangular detection frame.

The object tracker 22b tracks the object recognized by the object recognizer 22a in the subsequent frames. For tracking the object, for example, a particle filter or a mean shift method can be used. In the first embodiment, an object to be tracked is a hand of a person recognized by the object recognizer 22a.

The three-dimensional space recognizer 22c maps an object detected by the object recognizer 22a in a three-dimensional space specified by the depth map acquired from the imaging device 10. In the first embodiment, the three-dimensional space recognizer 22c detects a place touched by an occupant's hand in the three-dimensional space. In a case where the accessories present in the vehicle interior are also recognized as an object, an accessory touched by the occupant's hand can also be specified.

When the three-dimensional space recognizer 22c detects a frame picture in which the occupant's hand is in a state of touching the accessories, the detected frame picture is temporarily stored in the picture holder 23. The picture holder 23 is a volatile memory for temporarily storing the frame pictures.

On the basis of the frame pictures in the picture holder 23, the picture constructor 24 constructs pictures for displaying contact places (hereinafter, referred to as contact place pictures) that allow the user to recognize all the contact places touched by the occupant in the vehicle interior, from the start of imaging by the imaging device 10. The picture constructor 24 may construct, as the contact place pictures, heat map pictures in which a place more likely to have been touched by the occupant by his/her hand is displayed in a more conspicuous color. For example, a heat map picture with three-stage classification based on the contact possibility may be constructed. For example, a heat map picture in which a region having been touched by the occupant's hand is displayed in red, a region likely to have been touched by the occupant's hand is displayed in yellow, and a region having not been touched by the occupant's hand is displayed in green may be constructed. Note that a region not touched by the occupant's hand may be colorless.

The picture constructor 24 may construct contact place pictures in which brightness of the region touched by the occupant's hand is displayed brightest, the brightness of the region likely to be touched by the occupant's hand is displayed next brightest, and the brightness of the region not touched by the occupant's hand is displayed darkest. In addition, contact place pictures in which the region touched by the occupant's hand is blinking may be constructed.

The region in which a display mode is made conspicuous may be in units of accessories or in units of regions actually touched. In the case of making conspicuousness in units of accessories, for example, even when only part of the seat belt is touched, the entire seat belt is made conspicuous.

The picture constructor 24 may construct a contact place picture in a display mode in which the contact place is more conspicuous as the number of times of touch by the occupant by his/her hand is larger. For example, saturation may be made higher at a contact place where the number of times of touch is larger.

The picture constructor 24 may connect a plurality of frame pictures in which the occupant's hand is in a state of touching somewhere, being stored in the picture holder 23, and construct digest moving pictures for displaying contact places. In addition, the picture constructor 24 may construct one still picture by superimposing a plurality of frame pictures in which the occupant's hand is in a state of touching somewhere.

Note that the picture constructor 24 may construct pictures in which accessories touched by his/her hand of an occupant in the vehicle interior are simply listed in text information. In this case, it is not necessary to accumulate, in the picture holder 23, the frame pictures in which the occupant's hand is in a state of touching the accessory, and it is sufficient to hold management information for specifying the accessories touched by the occupant's hand.

When a user who intends to clean and disinfect the inside of the vehicle interior performs a display instruction operation of contact place pictures to a console (not illustrated), the picture constructor 24 constructs contact place pictures and causes the display device 30 to display the constructed contact place pictures.

The display device 30 may be a display (for example, a liquid crystal display or an organic EL display) of a car navigation system, a display audio system, or a drive recorder system installed in the vehicle C1. In addition, the display device 30 may be a display of a smartphone or a tablet in cooperation with the car navigation system, the display audio system, or the drive recorder system. Moreover, the display device 30 may be a display in a meter panel installed in the vehicle. Note that the display device 30 may be a display dedicated to the person monitoring system 1 according to the present embodiment.

Note that the picture constructor 24 may construct contact place pictures in real time while the vehicle C1 is traveling and cause the display device 30 to display the contact place pictures. In this case, when the occupant touches something in the vehicle interior, the contact place pictures are updated. The picture constructor 24 may cause the display device 30 to display, as contact place pictures, AR pictures in which an attention marker indicating a contact place is superimposed on a video imaged by the imaging device 10.

The recording medium 40 is a non-volatile recording medium for recording a video imaged by the imaging device 10. For example, a semiconductor memory card (for example, an SD card) or an optical disk can be used. The contact place picture constructed by the picture constructor 24 can also be recorded on the recording medium 40.

In the above description, it is assumed that the video analyzer 22 can acquire the depth map from the imaging device 10. If a depth sensor is provided in the imaging device 10 or the imaging device 10 has a binocular structure, the cost increases. In the following description, a processing example in a case where the video analyzer 22 cannot acquire the depth map from the imaging device 10 will be described. In this processing example, the three-dimensional space recognizer 22c is not provided, and a place touched by an occupant by his/her hand in the vehicle interior is detected only from a two-dimensional video.

In this processing example, for each accessory in the vehicle interior, a plurality of discriminators for recognizing a state where the occupant touches the accessory by learning a large number of pictures in which the occupant touches the accessory in various appearances are prepared as dictionary data. A set of discriminators for recognizing a state where the occupant touches the accessory may be prepared for each vehicle type. In this case, the position of each accessory can be specified with high accuracy in the imaged video, and whether the occupant touches the accessory can be determined with high accuracy.

Furthermore, as the dictionary data, a discriminator for recognizing the face of a person wearing a mask may be prepared. In addition, a discriminator for recognizing a state where the occupant is coughing may be prepared.

When detecting an occupant not wearing a mask in the frame pictures, the object recognizer 22a outputs a non-mask wearing detection signal to a warning controller 25. When detecting a coughing occupant in the frame picture, the object recognizer 22a outputs a cough detection signal to the warning controller 25. The object recognizer 22a outputs a distance approach detection signal to the warning controller 25 when a distance between the two occupants sitting on the back seat is equal to or less than a set value in the frame picture. When receiving the non-mask wearing detection signal, the cough detection signal, or the distance approach detection signal from the object recognizer 22a, the warning controller 25 causes the audio output device 50 to output a warning sound or a warning message.

The audio output device 50 may be a speaker of the car navigation system or the display audio system installed in the vehicle C1. In addition, the audio output device 50 may be a speaker of a smartphone or a tablet in cooperation with the car navigation system, the display audio system, or the drive recorder system. Note that the audio output device 50 may be a speaker dedicated to the person monitoring system 1 according to the present embodiment.

When the non-mask wearing detection signal is input from the video analyzer 22, the warning controller 25 causes the audio output device 50 to output a call attention message such as "Please wear a mask.". In addition, when the cough detection signal is input, the warning controller 25 causes the audio output device 50 to output call attention messages such as "Please ventilate.", "Please open the window.", "Please set the air conditioner to the outside air introduction mode.", "Run negative ion generator.". Note that the person monitoring system 1 according to the present embodiment may cooperate with an air conditioner system in the vehicle C1. In this case, when the cough detection signal is input, the warning controller 25 can automatically switch the air conditioner system to the outside air introduction mode.

When the distance approach detection signal is input from the video analyzer 22, the warning controller 25 causes the audio output device 50 to output a call attention message such as "Please make the distance between your seats a little.". Note that when the video analyzer 22 detects three occupants in the rear seat but does not detect an occupant in the passenger seat, a seating change instruction signal may be output to the warning controller 25. When the seating change instruction signal is input from the video analyzer 22, the warning controller 25 causes the audio output device 50 to output a call attention message such as "Could someone please move to the passenger seat?".

By adding a picture of a specific person, it is possible to exclude the specific person from the monitoring process object for the place touched by his/her hand. Specifically, the face of a person to be excluded from the monitoring process object is imaged by the imaging device 10 and added as dictionary data of the object recognizer 22a. Note that a still picture in which the face of the person appears may be input from the outside to the picture processing device 20.

When recognizing the face of a person in the frame picture, the object recognizer 22a determines whether the face of the person is the face of the person added as an exclusion target. In the case of the face of the person as an exclusion target, the object recognizer 22a or the three-dimensional space recognizer 22c excludes the hand of the person from a monitoring target. In a case where the face of the person recognized in the frame picture is not the face of the person of the exclusion target, detecting/recording processing of the above-described place touched by the hand is applied.

As a person to be added as exclusion target, the owner of the vehicle C1 and his/her family can be considered. In addition, a person determined to be less likely to be infected according to the results of a PCR test, an antigen test, or an antibody test may be added. For example, the load on the picture processing device 20 can be reduced by adding the owner of the vehicle C1 and his/her family as the exclusion target.

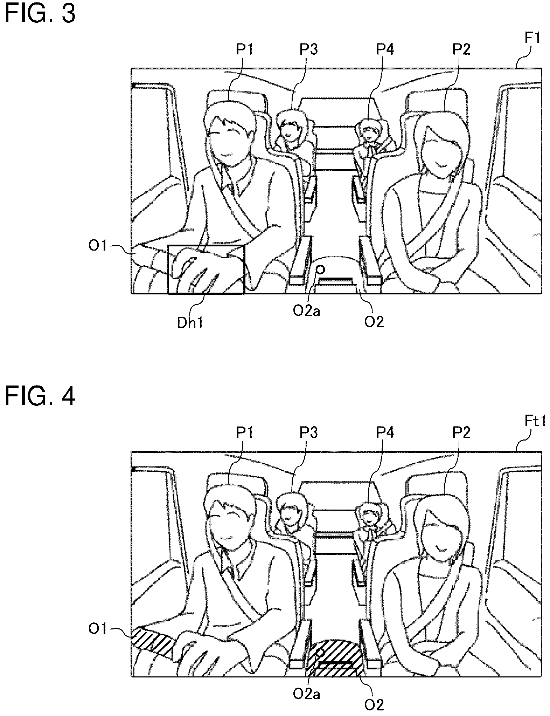

Fig. 3 is a diagram illustrating an example of a frame picture F1 imaged while the vehicle C1 is traveling according to the first embodiment. In the frame picture F1, a driver P1, a fellow passenger P2 in the passenger seat, and two fellow passengers P3 and P4 in the rear seats are detected as persons. A steering wheel O1, a bottle holder O2a on the center console O2, and the like are detected as the accessories in the vehicle interior. A hand Dh1 of the driver P1 is tracked as a monitoring target. Although not illustrated, hands of the fellow passengers P2, P3, and P4 are also monitoring targets.

Fig. 4 is a diagram illustrating an example of a contact place picture Ft1 according to the first embodiment. When display of the contact place picture Ft1 is instructed by a user who intends to clean and disinfect the inside of the vehicle interior, the contact place picture Ft1 are displayed on the display device 30. Fig. 4 illustrates an example in which the driver P1 touches the steering wheel O1 and the bottle holder O2a while driving. In Fig. 4, the entire region of the center console O2 including the steering wheel O1 and the bottle holder O2a is marked in red.

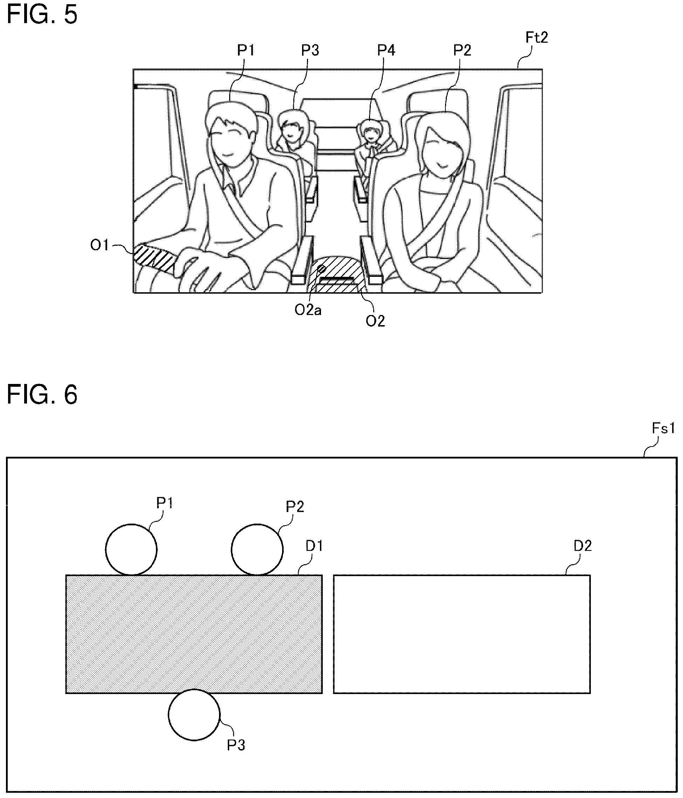

Fig. 5 is a diagram illustrating another example of a contact place picture Ft2 according to the first embodiment. In Fig. 5, the steering wheel O1 and the bottle holder O2a are marked in red, and the entire region of the center console O2 in which the bottle holder O2a is installed (excluding the region of the bottle holder O2a) is marked in yellow.

Note that the contact place picture Ft may be obtained by superimposing an attention marker, which indicates a region where a virus may exist, on an actually imaged picture of the vehicle interior, or by superimposing the attention marker on a simplified schematic diagram of the vehicle interior. Note that the attention marker may be superimposed by default on accessories (for example, a steering wheel, a shift lever, a winker lever, a door knob, and the like) that the occupant always touches by his/her hand. Note that the contact place picture Ft may be constructed as a heat map picture.

As described above, with the first embodiment, by constructing and displaying the contact place pictures indicating a region that may have been touched by the occupant, it is possible for the user who intends to clean and disinfect to intuitively grasp where to be preferentially disinfected. In particular, it is effective for a person who was not in the vehicle C1 and needs to efficiently clean and disinfect the inside of the vehicle interior in a short time, such as a cleaning person of a car rental company or a gas station clerk. Naturally, since it is difficult even for a person who was in the vehicle C1 to grasp and memorize places touched by all the occupants, it is useful to clean and disinfect while viewing the contact place pictures.

Next, a person monitoring system 1 according to a second embodiment will be described. In the first embodiment, the person monitoring system 1 is described that photographs the occupant with a camera installed in the vehicle interior, detects the occupant's hand, and monitors and records a place touched by the occupant by his/her hand. By contrast, the second embodiment relates to the person monitoring system 1 that detects a person in a room with a camera installed in the room in a building and monitors and records a place where the person stayed.

The person monitoring system 1 according to the second embodiment is assumed to monitor a room in a wide indoor space such as a conference room or a convention hall. Indoor monitoring cameras are typically installed on the ceiling of a room. In a case where a large room is monitored by one monitoring camera, it is necessary to photograph at a wide angle, which makes a person in a frame picture smaller in the size. In addition, a large number of people may be included in the frame picture. By contrast, in the first embodiment, since a narrow vehicle interior space is photographed, the size of the person in the frame picture is not equal to or smaller than a certain size. In the case of an ordinary vehicle, the maximum number of people included in the frame picture is five.

As described above, it is difficult to detect a hand of each person by picture recognition from frame pictures imaged by the imaging device 10 installed in a conference room, a convention hall, or the like and track the detected hand. Therefore, in the second embodiment, the head or the whole body of a person is detected, and the detected head or the whole body is tracked.

In the following description, an example is assumed in which the imaging device 10 is installed at the center of the ceiling of the room to photograph the entire room in a bird's eye view. In this case, the monitoring target is the head of the person viewed from above. Note that the imaging device 10 may be installed at a corner between the ceiling and a wall, and the entire room may be photographed in a manner of being overlooked obliquely. In this case, the monitoring target is the head or the whole body of the person viewed obliquely.

The picture processing device 20 may be structured as one function of a general-purpose information terminal device such as a PC, a tablet, and a smartphone. The picture processing device 20 and the imaging device 10 are connected in a wired (for example, a LAN cable or a USB cable) or wireless (for example, a wireless LAN) manner, and the video acquisitor 21 acquires a video from the imaging device 10.

In the second embodiment, the video analyzer 22 detects a place where the person has stayed in the room. The object recognizer 22a includes a discriminator for the head or the whole body of the person as dictionary data. In addition to the discriminator for the head or the whole body of the person, discriminators for various fixtures existing in the room are prepared. For example, discriminators for a desk, a chair, and the like may be prepared.

The object recognizer 22a sets an accompanying region around the detection region of the person in the frame picture. For example, a region in a picture corresponding to a circle having a radius of about 1 m to 2 m around the person may be set as the accompanying region. Hereinafter, a region obtained by combining the detection region of the person and the accompanying region set around the person is referred to as a behavior region. Note that the user can change the conversion ratio between the distance in the real space and the distance in a picture and the setting range of the accompanying region.

The object tracker 22b tracks the head or the whole body of the person recognized by the object recognizer 22a. When a plurality of persons are recognized in the frame picture, tracking is performed for each person.

The three-dimensional space recognizer 22c detects a place where the person has stayed in a three-dimensional space specified by a depth map acquired from the imaging device 10. In a case where the fixtures existing in the room are also recognized as an object, a fixture estimated to have been touched by the person can also be specified. When an overlapping portion occurs between the behavior region of the person and the detection region of the fixture, it is estimated that the person touched the fixture.

When detecting a frame picture in which the person is estimated to be in a state of touching the fixture, the three-dimensional space recognizer 22c stores the detected frame picture temporarily in the picture holder 23. Note that in the second embodiment, all the frame pictures in which the person is detected may be temporarily stored in the picture holder 23.

On the basis of the frame picture in the picture holder 23, the picture constructor 24 constructs pictures for displaying stay places (hereinafter, referred to as stay place pictures) that allow the user to recognize all the stay places where the person has stayed in the room, from the start of imaging by the imaging device 10. The picture constructor 24 may construct stay place pictures that allow a movement trajectory of the person in the room to be recognized. The picture constructor 24 may construct stay place pictures that allow a trajectory of the behavior region associated with the movement of the person in the room to be recognized.

The picture constructor 24 may construct, as the stay place pictures, heat map pictures in which a place closer to a place where the person has stayed is displayed in a more conspicuous color. For example, a heat map picture in which a region where the person has stayed is displayed in red, an accompanying region is displayed in yellow, and other regions are displayed in green (or colorless) may be constructed. In addition, a heat map picture in which a region where the person has stayed is displayed in red, and colors gradually change from red → yellow → green (or colorless) as a distance from the region where the person has stayed increases may be constructed.

In addition, the picture constructor 24 may construct stay place pictures in which the brightness of a region where the person has stayed is maximized and the brightness decreases as a distance from the region where the person has stayed increases. In addition, stay place pictures in which a region where the person has stayed is blinking may be constructed.

In a case where an overlapping portion occurs between the behavior region of the person and the detection region of the fixture, the picture constructor 24 may be in a display mode in which the entire fixture is conspicuous, or a display mode in which only the overlapping portion is conspicuous. In a case where the height of the fixture from the floor can be estimated, the picture constructor 24 may be in a display mode in which the fixture is more conspicuous as the height of the fixture from the floor is closer to the height of a hand of the person in a state of sitting or standing.

The picture constructor 24 may be in a display mode in which a region is more conspicuous where detection regions of a plurality of persons are more overlapping. For example, the saturation may be made higher in a region where the number of overlapping detection regions is larger. Note that the picture constructor 24 may be in a display mode in which a region is more conspicuous where behavior regions of a plurality of persons are more overlapping.

The picture constructor 24 may construct digest moving pictures for displaying stay places by connecting a plurality of frame pictures stored in the picture holder 23 in which an overlapping portion occurs between the behavior region of the person and the detection region of the fixture. In addition, the picture constructor 24 may construct one still picture by superimposing a plurality of frame pictures where an overlapping portion occurs between the behavior region of the person and the detection region of the fixture.

Note that the picture constructor 24 may construct pictures in which fixtures that are estimated to have been touched by the person in the room are simply listed in text information. In this case, it is not necessary to accumulate the frame pictures in the picture holder 23, and it is sufficient to hold management information for specifying the fixtures that are estimated to have been touched by the person.

When a user who intends to clean and disinfect the room performs a display instruction operation of stay place pictures to a console (not illustrated), the picture constructor 24 constructs a stay place picture and causes the display device 30 to display the constructed stay places picture.

The display device 30 may be a display of a general-purpose information terminal device such as a PC, a tablet, and a smartphone. Furthermore, the display device 30 may be a projector connected to the information terminal device. In this case, the projector projects the stay place picture on a screen. Furthermore, the display device 30 may be a head mount display connected to the information terminal device. In that case, the head mount display can display the stay place pictures as VR pictures. Note that, in a case where the display pictures for the contact place are constructed as stereoscopic pictures, the head mount display can display the stereoscopic VR video.

Note that the picture constructor 24 may construct stay place pictures in real time during use of the room (for example, during a meeting) and cause the display device 30 (for example, a projector) to display the stay place pictures. In this case, the stay place pictures are updated when the person enters or leaves the room or when the person moves from place to place in the room. The picture constructor 24 may cause the display device 30 to display, as stay place pictures, AR pictures in which an attention marker indicating a stay place of the person is superimposed on a video imaged by the imaging device 10.

Also in the second embodiment, the object recognizer 22a can output a distance approach detection signal to the warning controller 25 when a distance between the persons is equal to or less than a set value in the frame picture. When receiving the distance approach detection signal from the object recognizer 22a, the warning controller 25 causes the audio output device 50 to output a warning sound or a warning message. Note that, even in a case where a non-mask wearing person or a person coughing is detected, it is possible to cause the audio output device 50 to output the warning sound or the warning message.

Moreover, also in the second embodiment, by adding pictures of a specific person, it is possible to exclude the added person from the monitoring process object for the stay place.

Fig. 6 is a diagram illustrating a first example of a stay place picture Fs1 according to the second embodiment. When display of the stay place picture Fs1 is instructed by a user who intends to clean and disinfect the room, the stay place picture Fs1 are displayed on the display device 30. Fig. 6 illustrates the stay place picture Fs1 in a case where three persons P1, P2, and P3 use a first desk D1 on the left side during use of the room. A second desk D2 on the right side is not used. In Fig. 6, the first desk D1 on the left side is marked in red as an attention region.

In each frame picture, the object recognizer 22a determines whether the detection region of each of the persons P1, P2, and P3 and the detection region of the first desk D1 overlap, and whether the detection region of each of the persons P1, P2, and P3 and the detection region of the second desk D2 overlap. The object recognizer 22a determines that a desk having an overlap is used (the first desk D1 in Fig. 6).

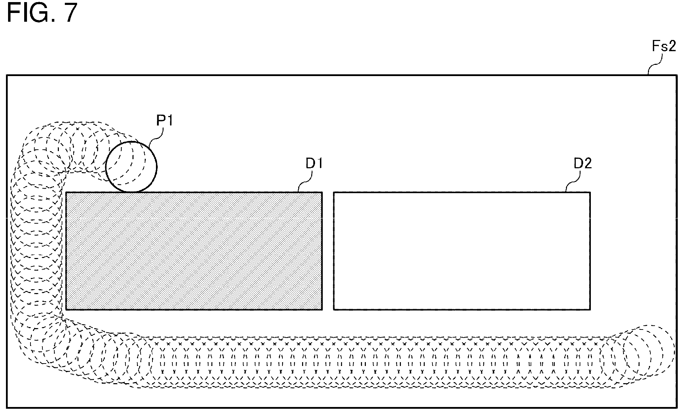

Fig. 7 is a diagram illustrating a second example of a stay place picture Fs2 according to the second embodiment. Fig. 7 illustrates the stay place picture Fs2 displaying a movement trajectory of the person P1 in the room. The picture illustrated in Fig. 7 indicates that a doorway of the room is on the right side, the person P1 moves to the left below the second desk D2 and the first desk D1, moves along the left side to the upper side of the first desk D1, and moves to the right above the first desk D1 to reach the current location. Note that a movement trajectory of the behavior region to which an accompanying region is added around the person P1 may be displayed.

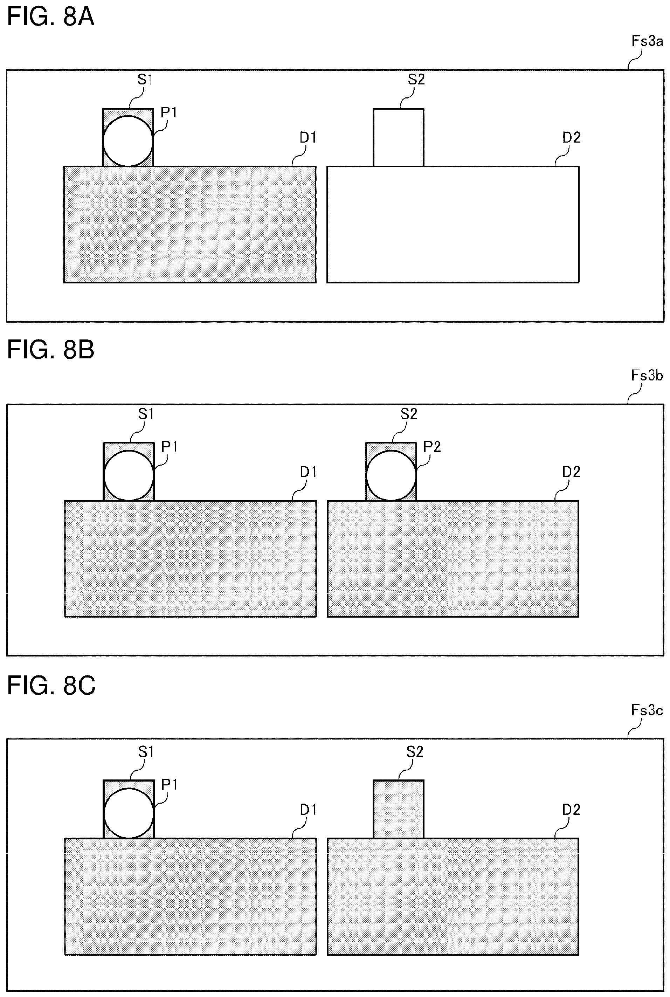

Figs. 8A to 8C are diagrams each illustrating a third example of a stay place picture Fs3 according to the second embodiment. The third example is an example of a room in which positions of a desk and a chair are fixed, such as an examination site and a large classroom. In a stay place picture Fs3a illustrated in Fig. 8A, a first person P1 sits on a first chair S1 on the left side. A second chair S2 on the right side is vacant. In this case, the first chair S1 and a first desk D1 on the left side is marked in red as attention regions.

In a stay place picture Fs3b illustrated in Fig. 8B, the first person P1 sits on the first chair S1 on the left side, and a second person P2 sits on the second chair S2 on the right side. In this case, the first chair S1 and the first desk D1 on the left side and the second chair S2 and the second desk D2 on the right side are marked in red as attention regions.

A stay place picture Fs3c illustrated in Fig. 8C illustrates a state after the second person P2 sitting on the second chair S2 on the right side has left the seat. Since the second person P2 has stayed at the positions of the second chair S2 and the second desk D2 on the right side, the second chair S2 and the second desk D2 on the right side are marked in red as the attention regions even after the second person P2 has left the seat.

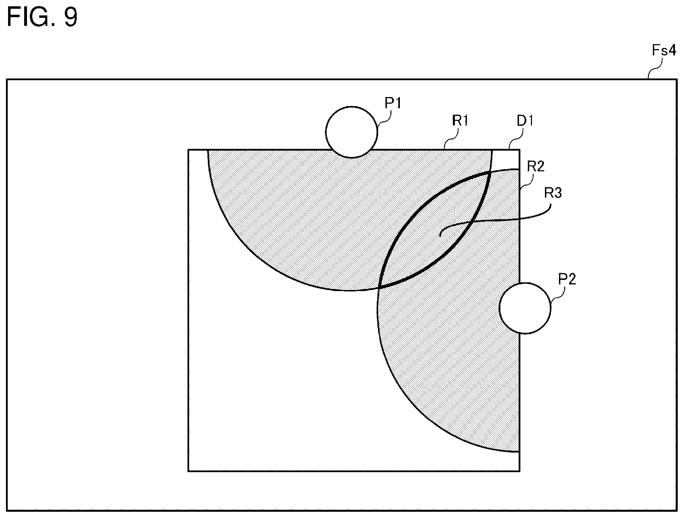

Fig. 9 is a diagram illustrating a fourth example of a stay place picture Fs4 according to the second embodiment. In the examples illustrated in Figs. 6 to Figs. 8A to 8C, the entire region of the desk that are estimated to have been touched by the person is marked in red. By contrast, in the fourth example illustrated in Fig. 9, only a region that is highly likely to have been touched by a person in the entire region of the desk is marked in red as an attention region. In Fig. 9, a first range R1 at a predetermined distance from the position of the first person P1 and a second range R2 at a predetermined distance from the position of the second person P2 are marked in red as the attention regions. These marked regions expand as the persons P1 and P2 move.

The predetermined distance is set to 2 m, for example, in consideration of social distancing. The predetermined distance may be switched depending on whether the mask is worn. In this case, the predetermined distance for a non-mask wearing person is set to be longer than the predetermined distance for the person wearing a mask.

Furthermore, in a case where the object recognizer 22a can detect the movement of the hand of the person, a range within which the hand has moved in the region of the entire desk may be marked in red as an attention region. At this time, the region marked in the entire region of the desk may be a region obtained by adding a predetermined buffer region to the range where the movement of the hand is actually detected. In addition, the region marked in the entire region of the desk may be a region overlapping with the behavior regions of the persons P1 and P2.

Note that an overlapping range R3 of the first range R1 and the second range R2 may be marked in a relatively conspicuous color as a higher-level attention region. For example, in the first range R1 and the second range R2, a range where both ranges do not overlap may be marked in green, and the overlapping range R3 of both ranges may be marked in red. In addition, a range of the predetermined distance for one person may be marked in green, an overlapping region of ranges of the predetermined distance for two persons may be marked in yellow, and an overlapping region of ranges of the predetermined distance for three or more persons may be marked in red.

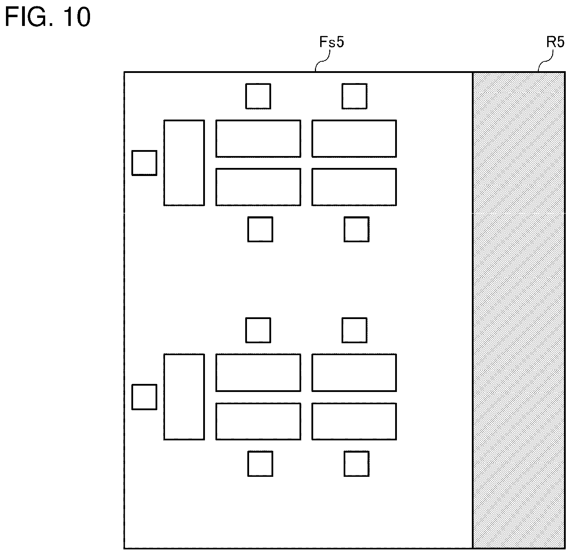

Fig. 10 is a diagram illustrating a fifth example of a stay place picture Fs5 according to the second embodiment. In the stay place picture Fs5 illustrated in Fig. 10, a region R5 as a passage where the movement of a person is frequent in the room is marked in red as an attention region. Note that the color may be changed according to the number of times a person passes through the passage. For example, 1 to 5 times may be marked in green, 6 to 10 times may be marked in yellow, and 11 times or more may be marked in red. Note that, in Fig. 10, the region R5 of the entire passage is marked as the attention region, but only a movement trajectory actually passed by a person, that is, a portion where the person and the passage overlap may be marked.

As described above, with the second embodiment, by constructing and displaying the stay place pictures indicating a region where the person has stayed, it is possible for the user who intends to clean and disinfect to intuitively grasp where to be preferentially disinfected. In particular, it is effective for a person who did not use the room (for example, who did not participate in the meeting) and needs to efficiently clean and disinfect the inside of the room in a short time, such as an external cleaner. Naturally, since it is also difficult for a person who used the room to grasp and memorize the movement of all the persons in the room, it is useful to clean and disinfect while viewing the stay place pictures.

Next, a person monitoring system 1 according to the third embodiment will be described. In the second embodiment, an example is described in which the picture constructor 24 constructs stay place pictures that allow a movement trajectory of a person in the room to be recognized, and causes the display device 30 to display the stay place pictures. In the third embodiment, whether a person in the room is speaking is further considered. If a person not wearing a mask speaks in the room, there is a possibility that droplets are scattered, and a possibility that a virus is present in a neighboring region of the person increases.

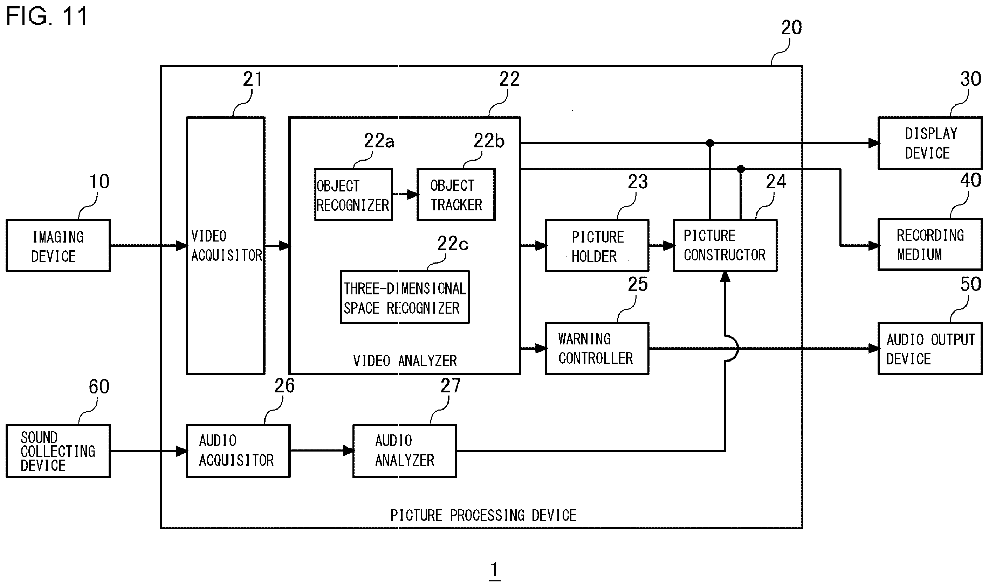

Fig. 11 is a diagram illustrating a structural example of the person monitoring system 1 according to the third embodiment. The person monitoring system 1 according to the third embodiment includes a picture processing device 20, a display device 30, a recording medium 40, an audio output device 50, and a sound collecting device 60. The picture processing device 20 includes a video acquisitor 21, a video analyzer 22, a picture holder 23, a picture constructor 24, a warning controller 25, an audio acquisitor 26, and an audio analyzer 27. Hereinafter, differences from the second embodiment will be described below.

The sound collecting device 60 includes a microphone for collecting sound in a space assumed to be a monitoring target of the imaging device 10. The sound collecting device 60 may be built in the imaging device 10. The sound collecting device 60 converts collected aerial vibration into an electrical sound signal, and outputs the converted sound signal to the picture processing device 20.

The audio acquisitor 26 acquires a sound signal from the sound collecting device 60. The audio analyzer 27 analyzes the sound signal acquired by the audio acquisitor 26. The audio analyzer 27 analyzes a spectrum of the sound signal to detect presence or absence of human speech sound. In a case where human speech sound is detected, the audio analyzer 27 detects the number of speakers. Furthermore, the audio analyzer 27 detects and holds at least one of the number of speaking times, cumulative speaking time, and loudness of the voice of each speaker. Note that, in the present embodiment, since it is not necessary to recognize speaking content, analysis using an acoustic model or a language model is not required.

As described above, the video analyzer 22 can recognize whether a person wears the mask. In the third embodiment, the video analyzer 22 further includes a discriminator for various states of the mouth of a person. In a case where a person not wearing a mask is detected, the video analyzer 22 recognizes the shape of the mouth of the person for each frame picture and determines the movement of the mouth in a series of the frame pictures. The video analyzer 22 determines whether the person is speaking from the movement of the mouth of the person. The video analyzer 22 detects the number of speakers. Furthermore, the video analyzer 22 detects mouth opening degree of each speaker.

In a case where the number of speakers detected by the video analyzer 22 is smaller than the number of speakers detected by the audio analyzer 27, a possibility that a person who does not fall within an angle of view of the imaging device 10 is speaking, a possibility that a person who does not face a direction of the imaging device 10 is speaking, or a possibility that a person wearing a mask is speaking is considered. In that case, the video analyzer 22 may regard all of the person who does not face the direction of the imaging device 10 and the person wearing a mask as speakers.

The picture constructor 24 references to at least one of the number of speaking times, the speaking time, the loudness of the voice, and the mouth opening degree of each person among the persons imaged by the imaging device 10, and determines a display mode of an accompanying region associated with a detection region of each person in the stay place picture.

The picture constructor 24 may set the area of the accompanying region associated with the detection region of a person who spoke to be larger than the area of the accompanying region associated with the detection region of a person who did not speak. At that time, the picture constructor 24 may set the area of the accompanying region associated with the detection region of a person to be larger as the number of speaking times of the person is larger, as the cumulative speaking time of the person is longer, as the voice of the person is larger, or as the mouth opening degree of the person is larger. Note that the accompanying region the area of which increases may be only a region in a direction in which the face of the person faces (for example, a 180-degree region).

The picture constructor 24 may set the area of the accompanying region associated with the detection region of the person who did not speak to be smaller than the area of the accompanying region associated with the detection region of the person who spoke.

The picture constructor 24 may mark the accompanying region associated with the detection region of the person who spoke in a more conspicuous color (for example, red or purple) than the color of the accompanying region associated with the detection region of the person who did not speak. At that time, the picture constructor 24 may set the color of the accompanying region associated with the detection region of a person to be deeper as the number of speaking times of the person is larger, as the cumulative speaking time of the person is longer, as the voice of the person is larger, or as the mouth opening degree of the person is larger. Note that the accompanying region the color of which is made deeper may be only a region in a direction in which the face of the person faces.

For example, in the above-described Fig. 6, in a case where the person P2 faces the direction of the second desk D2 and speaks or coughs, the picture constructor 24 marks the second desk D2 in red. Similarly, in the above-described Fig. 7, in a case where the person P1 faces the direction of the second desk D2 and speaks or coughs while the person P1 is moving, the picture constructor 24 marks the second desk D2 in red.

The picture constructor 24 may make color of a region darker where accompanying regions associated with the detection regions of persons who spoke are more overlapping. The picture constructor 24 may mark the accompanying region associated with the detection region of the person who did not speak in a less conspicuous color (for example, green or colorless) than the color of the accompanying region associated with the detection region of the person who spoke.

In the above-described Fig. 9, the first range R1 at a predetermined distance from the position of the first person P1 and a second range R2 at a predetermined distance from the position of the second person P2 are marked in red as the attention regions (accompanying regions). The predetermined distance, for example, may be set to 1 m when the person did not speak, and may be set to 2 m when the person spoke. The attention region of a person who did not speak is set to 1 m in consideration of a range that the person can reach by his/her hand. The attention region of a person who spoke is set to 2 m in consideration of a range that droplets of the person can reach.

The picture constructor 24 may mark the overlapping range R3 of the first range R1 and the second range R2 in red when the first person P1 did not have a conversation with the second person P2, and may mark the overlapping range R3 in purple when the first person P1 had a conversation with the second person P2. Here, the attention level of purple is higher than that of red.

As described above, with the third embodiment, when constructing and displaying stay place pictures indicating a region where the person has stayed, by displaying a region where droplets are likely to have been scattered in a conspicuous color, a region that is to be preferentially cleaned and disinfected can be appropriately presented to the user.

The present invention has been described above based on the embodiments. The embodiments are intended to be illustrative only and it will be understood by those skilled in the art that various modifications to their constituting elements and processes can be made and that such modifications are also within the scope of the present invention.

In the first embodiment, for example, a driver basically holds a steering wheel with his/her hand during driving. On the other hand, pictures in which the driver is in a state of performing other movements (for example, movement of touching a bottle holder to drink water, or the like) are greatly different from pictures in which the driver is in a normal state of gripping the steering wheel. The object recognizer 22a may store, in the picture holder 23, all frame pictures in which the driver does not hold the steering wheel with the hand in the frame pictures. The picture constructor 24 may construct digest moving pictures for displaying contact places by connecting a plurality of frame pictures stored in the picture holder 23. In addition, the picture constructor 24 may construct one still picture by superimposing a plurality of frame pictures stored in the picture holder 23. In this case, although the accuracy is reduced, it is possible to construct a contact place picture simply.

In the second embodiment, the object recognizer 22a may store, in the picture holder 23, all frame pictures in which the person is detected in the frame pictures. The picture constructor 24 may construct digest moving pictures for displaying stay places by connecting a plurality of frame pictures stored in the picture holder 23. In addition, the picture constructor 24 may construct one still picture by superimposing a plurality of frame pictures stored in the picture holder 23. In this case, although the accuracy is reduced, it is possible to construct a stay place picture simply.

In the first embodiment, an example in which a person's hand is a monitoring target and the inside of the vehicle interior is monitored is described. In this regard, the monitoring is not limited to the example of monitoring the inside of the vehicle interior as long as it is monitoring of a narrow space where a hand of a person is easily detected. Even in a room in a building, the person monitoring system 1 according to the first embodiment effectively functions as long as it is monitoring a small room allowing only a few people to enter.

In the second embodiment, an example in which a person itself is a monitoring target and the inside of a room of a building is monitored is described. In this respect, the person monitoring system 1 according to the second embodiment can also be applied to monitoring an indoor space in a moving body such as a train, a bus, an airplane, or a ship. It is also applicable to monitoring of a certain range of outdoor space.

Furthermore, the new coronavirus is killed in about 7 days at the maximum, depending on a substance to which the new coronavirus attaches and environmental conditions. Therefore, when a set time or more has elapsed after the end of use of a vehicle or a room, it is not required to display an attention region in the pictures.

### [INDUSTRIAL APPLICABILITY]

The present invention can be used for preventive measures against infection with the new coronavirus.

### [REFERENCE SIGNS LIST]

C1 vehicle, 1 person monitoring system, 10 imaging device, 20 picture processing device, 21 video acquisitor, 22 video analyzer, 22a object recognizer, 22b object tracker, 22c three-dimensional space recognizer, 23 picture holder, 24 picture constructor, 25 warning controller, 26 audio acquisitor, 27 audio analyzer, 30 display device, 40 recording medium, 50 audio output device, 60 sound collecting device.

## Claims

1. A picture processing device (20) comprising:
a video acquisitor (21) structured to acquire a video of a space in which a person exists, the video being imaged by an imaging device (10);
a video analyzer (22) structured to analyze the acquired video and detect a place where the person has stayed in the space,
wherein the video analyzer (22) includes an object recognizer (22a), an object tracker (22b), and a three-dimensional space recognizer (22c),
wherein the object recognizer (22a) includes a discriminator for the head or the whole body of the person and discriminators for various fixtures existing in the space,
wherein the object recognizer (22a) is structured to set an accompanying region around the detection region of the person in the frame picture of the video, wherein a region obtained by combining the detection region of the person and the accompanying region set around the person is referred to as a behavior region,
wherein the object tracker (22b) is structured to track the head or the whole body of the person recognized by the object recognizer (22a),
wherein the three-dimensional space recognizer (22c) is structured to detect a place where the person has stayed in a three-dimensional space specified by a depth map acquired from the imaging device (10) and to detect a frame picture of the video in which the person is estimated to be in a state of touching the fixture by determining that an overlapping portion occurs between the behavior region of the person and the detection region of the fixture; and
a picture constructor (24) structured to construct display pictures that allow all stay places where the person has stayed to be recognized, from start of imaging by the imaging device (10),
wherein in a case where an overlapping portion occurs between the behavior region of the person and the detection region of the fixture, the picture constructor (24) is structured to be in a display mode in which the entire fixture is conspicuous, or a display mode in which only the overlapping portion is conspicuous.

2. The picture processing device (20) according to claim 1, wherein
the picture constructor (24) is structured to be in a display mode in which the fixture is more conspicuous as the height of the fixture from the floor is closer to the height of a hand of the person in a state of sitting or standing.

3. The picture processing device (20) according to claim 1 or 2, wherein
the picture constructor (24) is structured to reference to at least one of a number of speaking times, speaking time, loudness of voice, and a mouth opening degree of each person among persons imaged by the imaging device (10), and determines an area of an accompanying region associated with a detection region of each person in the display pictures

4. The picture processing device (20) according to claim 3, wherein
the picture constructor (24) is structured to set the area of the accompanying region in which the area of the accompanying region increases as the number of speaking times of the person is larger, as the cumulative speaking time of the person is longer, as the voice of the person is larger, or as the mouth opening degree of the person is larger

5. The picture processing device (20) according to claim 4 wherein
the picture constructor (24) is structured to set the area of the accompanying region in which the area of the accompanying region increases only in a direction in which a face of the person faces

6. The picture processing device (20) according to any one of claims 1 to 5, wherein
the imaging device (10) is an imaging device (10) installed in a building or a moving body and structured to image a certain space in the building or the moving body.

7. A picture processing method comprising:
acquiring a video of a space in which a person exists, the video being imaged by an imaging device;
analyzing the acquired video and detecting a place where the person has stayed in the space; wherein
the analyzing includes:
setting an accompanying region around the detection region of the person in the frame picture of the video, wherein a region obtained by combining the detection region of the person and the accompanying region set around the person is referred to as a behavior region,
tracking the head or the whole body of the person recognized by the object recognizer (22a),
detecting a place where the person has stayed in a three-dimensional space specified by a depth map acquired from the imaging device and to detecting a frame picture of the video in which the person is estimated to be in a state of touching the fixture by determining that an overlapping portion occurs between the behavior region of the person and the detection region of the fixture, and
constructing display pictures that allow all stay places where the person has stayed to be recognized, from start of imaging by the imager,
wherein in a case where an overlapping portion occurs between the behavior region of the person and the detection region of the fixture, the constructing includes being in a display mode in which the entire fixture is conspicuous, or a display mode in which only the overlapping portion is conspicuous.

8. A picture processing program comprising instructions which, when the program is executed by a computer, cause the computer to carry out the picture processing method of claim 7.

## Patentansprüche

1. Bildverarbeitungsvorrichtung (20), die Folgendes umfasst:
einen Videoerfasser (21), der strukturiert ist, um ein Video eines Raums zu erfassen, in dem sich eine Person befindet, wobei das Video durch eine Bildgebungsvorrichtung (10) abgebildet wird;
einen Videoanalysator (22), der strukturiert ist, um das erfasste Video zu analysieren und einen Ort zu erfassen, an dem sich die Person in dem Raum aufgehalten hat,
wobei der Videoanalysator (22) einen Objekterkenner (22a), einen Objektverfolger (22b) und einen dreidimensionalen Raumerkenner (22c) beinhaltet,
wobei der Objekterkenner (22a) einen Diskriminator für den Kopf oder den ganzen Körper der Person und Diskriminatoren für verschiedene in dem Raum vorhandene Armaturen beinhaltet,
wobei der Objekterkenner (22a) strukturiert ist, um einen Begleitbereich um den Erfassungsbereich der Person in dem Einzelbild des Videos einzustellen, wobei ein Bereich, der durch Kombinieren des Erfassungsbereichs der Person und des um die Person eingestellten Begleitbereichs erhalten wird, als ein Verhaltensbereich bezeichnet wird,
wobei der Objektverfolger (22b) strukturiert ist, um den Kopf oder den ganzen Körper der Person zu verfolgen, der durch den Objekterkenner (22a) erkannt wird,
wobei der dreidimensionale Raumerkenner (22c) strukturiert ist, um einen Ort zu erfassen, an dem sich die Person in einem dreidimensionalen Raum aufgehalten hat, der durch eine Tiefenkarte spezifiziert ist, die von der Bildgebungsvorrichtung (10) erfasst wird, und um ein Einzelbild des Videos zu erfassen, in dem geschätzt wird, dass sich die Person in einem Zustand befindet, in dem sie die Armatur berührt, indem bestimmt wird, dass ein überlappender Abschnitt zwischen dem Verhaltensbereich der Person und dem Erfassungsbereich der Armatur auftritt; und
einen Bildkonstruktor (24), der strukturiert ist, um Anzeigebilder zu konstruieren, die es ermöglichen, dass alle Aufenthaltsorte, an denen sich die Person aufgehalten hat, von Beginn der Bildgebung durch die Bildgebungsvorrichtung (10) erkannt werden,
wobei in einem Fall, in dem ein überlappender Abschnitt zwischen dem Verhaltensbereich der Person und dem Erfassungsbereich der Armatur auftritt, der Bildkonstruktor (24) strukturiert ist, um sich in einem Anzeigemodus, in dem die gesamte Armatur auffällig ist, oder einem Anzeigemodus, in dem nur der überlappende Abschnitt auffällig ist, zu befinden.

2. Bildverarbeitungsvorrichtung (20) nach Anspruch 1, wobei
der Bildkonstruktor (24) strukturiert ist, um sich in einem Anzeigemodus zu befinden, in dem die Armatur auffälliger ist, wenn die Höhe der Armatur von dem Boden näher an der Höhe einer Hand der Person in einem Zustand des Sitzens oder Stehens ist.

3. Bildverarbeitungsvorrichtung (20) nach Anspruch 1 oder 2, wobei
der Bildkonstruktor (24) strukturiert ist, um sich auf eine Anzahl von Sprechzeiten, eine Sprechzeit, eine Lautstärke der Stimme und/oder einen Mundöffnungsgrad jeder Person unter Personen, die durch die Bildgebungsvorrichtung (10) abgebildet werden, zu beziehen, und einen Bereich eines Begleitbereichs, der einem Erfassungsbereich jeder Person in den Anzeigebildern zugeordnet ist, bestimmt.

4. Bildverarbeitungsvorrichtung (20) nach Anspruch 3, wobei
der Bildkonstruktor (24) strukturiert ist, um den Bereich des Begleitbereichs einzustellen, in dem der Bereich des Begleitbereichs zunimmt, wenn die Anzahl von Sprechzeiten der Person größer ist, wenn die kumulative Sprechzeit der Person länger ist, wenn die Stimme der Person größer ist oder wenn der Mundöffnungsgrad der Person größer ist.

5. Bildverarbeitungsvorrichtung (20) nach Anspruch 4, wobei
der Bildkonstruktor (24) strukturiert ist, um den Bereich des Begleitbereichs einzustellen, in dem der Bereich des Begleitbereichs nur in einer Richtung, in die ein Gesicht der Person zeigt, zunimmt.

6. Bildverarbeitungsvorrichtung (20) nach einem der Ansprüche 1 bis 5, wobei
die Bildgebungsvorrichtung (10) eine Bildgebungsvorrichtung (10) ist, die in einem Gebäude oder einem sich bewegenden Körper installiert ist und strukturiert ist, um einen bestimmten Raum in dem Gebäude oder dem sich bewegenden Körper abzubilden.

7. Bildverarbeitungsverfahren, das Folgendes umfasst:
Erfassen eines Videos eines Raums, in dem sich eine Person befindet, wobei das Video durch eine Bildgebungsvorrichtung abgebildet wird;
Analysieren des erfassten Videos und Erfassen eines Orts, an dem sich die Person in dem Raum aufgehalten hat; wobei
das Analysieren Folgendes beinhaltet:
Einstellen eines Begleitbereichs um den Erfassungsbereich der Person in dem Einzelbild des Videos, wobei ein Bereich, der durch Kombinieren des Erfassungsbereichs der Person und des um die Person eingestellten Begleitbereichs erhalten wird, als ein Verhaltensbereich bezeichnet wird,
Verfolgen des Kopfes oder des ganzen Körpers der Person, der durch den Objekterkenner (22a) erkannt wird,
Erfassen eines Orts, an dem sich die Person in einem dreidimensionalen Raum aufgehalten hat, der durch eine Tiefenkarte spezifiziert ist, die von der Bildgebungsvorrichtung erfasst wird, und um ein Einzelbild des Videos zu erfassen, in dem geschätzt wird, dass sich die Person in einem Zustand befindet, in dem sie die Armatur berührt, indem bestimmt wird, dass ein überlappender Abschnitt zwischen dem Verhaltensbereich der Person und dem Erfassungsbereich der Armatur auftritt, und
Konstruieren von Anzeigebildern, die es ermöglichen, dass alle Aufenthaltsorte, an denen sich die Person aufgehalten hat, von Beginn der Bildgebung durch die Bildgebungsvorrichtung erkannt werden,
wobei in einem Fall, in dem ein überlappender Abschnitt zwischen dem Verhaltensbereich der Person und dem Erfassungsbereich der Armatur auftritt, das Konstruieren beinhaltet, sich in einem Anzeigemodus, in dem die gesamte Armatur auffällig ist, oder einem Anzeigemodus, in dem nur der überlappende Abschnitt auffällig ist, zu befinden.

8. Bildverarbeitungsprogramm, das Anweisungen umfasst, die, wenn das Programm von einem Computer ausgeführt wird, den Computer dazu veranlassen, das Bildverarbeitungsverfahren nach Anspruch 7 auszuführen.

## Revendications

1. Dispositif de traitement d'image (20) comprenant :
un dispositif d'acquisition de vidéo (21) structuré pour acquérir une vidéo d'un espace dans lequel une personne existe, la vidéo étant imagée par un dispositif d'imagerie (10) ;
un analyseur de vidéo (22) structuré pour analyser la vidéo acquise et détecter un endroit où la personne est restée dans l'espace,
dans lequel l'analyseur de vidéo (22) comprend un dispositif de reconnaissance d'objet (22a), un dispositif de suivi d'objet (22b) et un dispositif de reconnaissance d'espace tridimensionnel (22c),
dans lequel le dispositif de reconnaissance d'objet (22a) comprend un discriminateur pour la tête ou le corps entier de la personne et des discriminateurs pour divers accessoires existant dans l'espace,
dans lequel le dispositif de reconnaissance d'objet (22a) est structuré pour définir une région d'accompagnement autour de la région de détection de la personne dans l'image de trame de la vidéo, dans lequel une région obtenue en combinant la région de détection de la personne et la région d'accompagnement définie autour de la personne est appelée région de comportement,
dans lequel le dispositif de suivi d'objet (22b) est structuré pour suivre la tête ou le corps entier de la personne reconnue par le dispositif de reconnaissance d'objet (22a),
dans lequel le dispositif de reconnaissance d'espace tridimensionnel (22c) est structuré pour détecter un endroit où la personne est restée dans un espace tridimensionnel spécifié par une carte de profondeur acquise à partir du dispositif d'imagerie (10) et pour détecter une image de trame de la vidéo dans laquelle la personne est estimée être dans un état de toucher l'accessoire en déterminant qu'une partie de chevauchement se produit entre la région de comportement de la personne et la région de détection de l'accessoire ; et
un constructeur d'image (24) structuré pour construire des images d'affichage qui permettent à tous les endroits de séjour où la personne est restée d'être reconnus, à partir du début de l'imagerie par le dispositif d'imagerie (10),
dans lequel dans un cas où une partie de chevauchement se produit entre la région de comportement de la personne et la région de détection de l'accessoire, le constructeur d'image (24) est structuré pour être dans un mode d'affichage dans lequel l'accessoire entier est visible, ou un mode d'affichage dans lequel seule la partie de chevauchement est visible.

2. Dispositif de traitement d'image (20) selon la revendication 1, dans lequel
le constructeur d'image (24) est structuré pour être dans un mode d'affichage dans lequel l'accessoire est plus visible lorsque la hauteur de l'accessoire à partir du sol est plus proche de la hauteur d'une main de la personne dans un état assis ou debout.

3. Dispositif de traitement d'image (20) selon la revendication 1 ou 2, dans lequel
le constructeur d'image (24) est structuré pour se référer à au moins l'un d'un nombre de temps de parole, d'un temps de parole, d'une intensité sonore de voix, et d'un degré d'ouverture de bouche de chaque personne parmi des personnes imagées par le dispositif d'imagerie (10), et détermine une zone d'une région d'accompagnement associée à une région de détection de chaque personne dans les images d'affichage.

4. Dispositif de traitement d'image (20) selon la revendication 3, dans lequel
le constructeur d'image (24) est structuré pour définir la zone de la région d'accompagnement dans laquelle la zone de la région d'accompagnement augmente lorsque le nombre de temps de parole de la personne est plus grand, lorsque le temps de parole cumulé de la personne est plus long, lorsque la voix de la personne est plus grande, ou lorsque le degré d'ouverture de bouche de la personne est plus grand.

5. Dispositif de traitement d'image (20) selon la revendication 4, dans lequel
le constructeur d'image (24) est structuré pour définir la zone de la région d'accompagnement dans laquelle la zone de la région d'accompagnement augmente uniquement dans une direction dans laquelle un visage de la personne fait face,

6. Dispositif de traitement d'image (20) selon l'une quelconque des revendications 1 à 5, dans lequel
le dispositif d'imagerie (10) est un dispositif d'imagerie (10) installé dans un bâtiment ou un corps mobile et structuré pour imager un certain espace dans le bâtiment ou le corps mobile.

7. Procédé de traitement d'image comprenant :
l'acquisition d'une vidéo d'un espace dans lequel une personne existe, la vidéo étant imagée par un dispositif d'imagerie ;
l'analyse de la vidéo acquise et la détection d'un endroit où la personne est restée dans l'espace ; dans lequel
l'analyse comprend :
la définition d'une région d'accompagnement autour de la région de détection de la personne dans l'image de trame de la vidéo, dans lequel une région obtenue en combinant la région de détection de la personne et la région d'accompagnement définie autour de la personne est appelée région de comportement,
le suivi de la tête ou du corps entier de la personne reconnue par le dispositif de reconnaissance d'objet (22a),
la détection d'un endroit où la personne est restée dans un espace tridimensionnel spécifié par une carte de profondeur acquise à partir du dispositif d'imagerie et pour détecter une image de trame de la vidéo dans laquelle la personne est estimée être dans un état de toucher l'accessoire en déterminant qu'une partie de chevauchement se produit entre la région de comportement de la personne et la région de détection de l'accessoire, et
la construction d'images d'affichage qui permettent à tous les endroits de séjour où la personne est restée d'être reconnus, à partir du début de l'imagerie par l'imageur,
dans lequel dans un cas où une partie de chevauchement se produit entre la région de comportement de la personne et la région de détection de l'accessoire, la construction comprend le fait d'être dans un mode d'affichage dans lequel l'accessoire entier est visible, ou un mode d'affichage dans lequel seule la partie de chevauchement est visible.

8. Programme de traitement d'image comprenant des instructions qui, lorsque le programme est exécuté par un ordinateur, amènent l'ordinateur à réaliser le procédé de traitement d'image selon la revendication 7.
